# EUROPÄISCHE PATENTSCHRIFT

(11) **EP 1 464 465 B1**
(45) Veröffentlichungstag und Bekanntmachung des Hinweises auf die Patenterteilung: **09.05.2007**
(21) Anmeldenummer: 04004168.3
(22) Anmeldetag: 25.02.2004
(51) Int. Cl.: B29C 45/16, F02F 7/00

(54) **Verfahren zur Herstellung eines mit einer Dichtung versehenen Kunststoffbauteiles sowie Kunststoffbauteil**
Process of manufacturing a plastic part having a sealing element and plastic part
Procédé de fabrication d'une pièce en plastique avec un joint d'étancheité et pièce en plastique

(30) Priorität: 28.03.2003 DE 10314033
(43) Veröffentlichungstag der Anmeldung: 06.10.2004
(73) Patentinhaber: Federal-Mogul Sealing Systems Bretten GmbH, 75015 Bretten (DE)
(72) Erfinder: Salameh, Ralf, 75053 Gondelsheim (DE)

(56) Entgegenhaltungen:
- EP-A- 0 665 370
- DE-A- 10 119 892
- US-A- 5 685 443

## Beschreibung

Die Erfindung betrifft ein Verfahren zur Herstellung eines Kunststoffbauteils für eine Brennkraftmaschine wobei das Kunststofbauteil, mit einer elastomeren Dichtung in Wirkverbindung steht , sowie das so hergestellte Kunststoffbauteil.
Der EP-A 0665370 ist eine durch Spritzgießen erzeugte Kunststoffhaube zu entnehmen, die aus wenigstens zwei unterschiedlichen Kunststoffen gebildet ist. Die Haube kann mit einer elastomeren Dichtung in Wirkverbindung gebracht werden. Ein Versteifungsmaterial ist zwischen Dichtung und Kunststoffhaube nicht vorgesehen.
In der EP-B 0860602 wird ein Verfahren zur Herstellung einer Zylinderkopfhaube für eine Brennkraftmaschine sowie eine Zylinderkopfhaube beschrieben. Die Zylinderkopfhaube wird durch folgende Verfahrensschritte erzeugt:

### Formen des Haubenteiles aus Kunststoff

Aktivieren einer im Haubenteil gegenüberstehenden Fläche der Dichtung durch KoronaBehandlung
Aufbringen von Klebstoff auf die aktivierte Fläche der Dichtung und/oder auf eine Gegenfläche des Haubenteiles
Einbringen von Haubenteil und Dichtung in eine heizbare vorgewärmte Klebevorrichtung
Halten der Klebevorrichtung im geschlossenen Zustand für eine vorgebbare Zeit auf einer vorgebbaren Temperatur und
Entnehmen der fertigen Zylinderkopfhaube aus der Klebevorrichtung.
Die mit einem Trägerelement versehene Dichtung wird unabhängig von der Haube erzeugt, so dass zwei verschiedene Formteile zur Erzeugung der Einzelteile notwendig sind und ein weiteres Formteil notwendig ist, um beide Elemente aufzunehmen, ehe eine wirksame Verbindung der beiden Elemente herbeigeführt werden kann.
Der DE-A 196 233 36 ist eine Abdeckvorrichtung zum Verschließen von Motorgehäusen, insbesondere eine Ventildeckelvorrichtung für den Zylinderkopf eines Kraftfahrzeugmotors, zu entnehmen. Die Abdeckvorrichtung beinhaltet einen Ventildeckel sowie eine biegeelastische Dichtung, welche an der dem Zylinderkopf zugewandten Randfläche des Ventildeckels in eine umlaufende Nut eingreift. Ein an den Ventildeckel anschliessbarer Dichtungshalter ist mit Durchtrittsöffnungen für die Dichtung vorgesehen, welcher die zwischen dem Nutgrund und dem Zylinderkopf einspannbare Dichtung formschlüssig hält.
Bei aus Kunststoff(en) hergestellten Bauteilen, wie Hauben, Deckeln oder dergleichen müssen die Dichtungen aufgrund der Gegebenheiten größere Toleranzen als bei Metallhauben ausgleichen können. Dies ist im wesentlichen in der geringeren Steifigkeit und durch grössere Relaxations- und Alterungseinflüsse, wie bei Metallhauben und -deckeln begründet.
Der Erfindung liegt die Aufgabe zugrunde, ein Verfahren zur Herstellung eines im
Bereich einer Brennkraftmaschine einsetzbaren mit einer elastomeren Dichtung in Verbindung stehenden Kunststoffbauteiles bereitzustellen, das die bei derartigen Bauteilen gegebenen Probleme nach deren Erzeugung nicht mehr beinhaltet und somit zu einer größeren Lebensdauer der mit Dichtelementen in Wirkverbindung stehenden Kunststoffbauteile führt.
Diese Aufgabe wird erfindungsgemäß durch die Merkmale der Patentansprüche 1 und 6 gelöst.

Die elastomere Dichtung wird an mindestens ein Trägerelement angeformt,
das Trägerelement samt Dichtung wird in eine Form bzw. ein Formteil eines Kunststoff-Spritzgießwerkzeuges eingebracht und das Kunststoffbauteil wird ausschliesslich durch Anformung von Kunststoffmaterial an das Trägerelement erzeugt,
das fertige Kunststoffbauteil samt angeformter Dichtung wird entformt.
Vorteilhafte Weiterbildungen des erfindungsgemäßen Verfahrens sind den zugehörigen verfahrensgemäßen Unteransprüchen zu entnehmen.

Vorteilhafte Weiterbildungen des Kunststoffbauteiles sind den zugehörigen Unteransprüche dargelegt.
Mit dem Erfindungsgegenstand wird ein neuer technischer Gedanke zur Erzeugung eines Dichtsystems, bestehend aus einem Kunststoffbauteil, wie einer Kunststoffhaube, einem Deckel oder dergleichen, in Wirkverbindung mit einer elastomeren Dichtung beschrieben. Der Erfindungsgegenstand hebt sich vom Stand der Technik durch vereinfachte Fertigungsschritte aus, wobei die nötige Steifigkeit des Systems durch das, metallisch ausgebildete, Trägerelement herbeigeführt wird. Dadurch kann das Kunststoffbauteil, wie die Zylinderkopfhaube, der Deckel oder dergleichen, baulich einfacher gestaltet werden.
Nach Durchlauf der erfindungsgemäßen Fertigungsschritte erhält man ein Kunststoffbauteil, wie eine Kunststoffhaube, einen Deckel oder dergleichen, mit angeformter, vorzugsweise angespritzter, metallisch verstärkter Dichtung. Mit dem Erfindungsgegenstand werden folgende Vorteile erzielt:

Das Kunststoffbauteil, wie die Zylinderkopfhaube, der Deckel oder dergleichen kann unmittelbar über das metallische Trägerelement montiert, beispielsweise verschraubt werden. Auf Einsätze, wie zum Beispiel Buchsen, kann verzichtet werden.
Das Trägerelement kann beliebig steif ausgeführt werden, so dass unterschiedlichen Anwendungsfällen Rechnung getragen werden kann.
Die negativen Eigenschaften des Kunststoffinaterials, im Hinblick auf das Dichtsystem, werden durch das Trägerelement ausgeglichen.
Duch das Trägerelement kann auf Verschraubungspunkte verzichtet werden.
Das Grundsystem kann auch bei entkoppelten Dichtsystemen eingesetzt werden.
eventuell notwendige Tempervorgänge des Elastomermaterials müssen nicht zusammen mit dem gesamten Bauteil ausgeführt werden, sondern nur mit dem Trägerelement.
Da die Eigensteifigkeit stark durch das Trägerelement bestimmt wird, kann das Kunststoffbauteil, wie die Zylinderkopfhaube, der Deckel oder dergleichen, einfacher gestaltet werden.
Der Erfindungsgegenstand ist anhand eines Ausführungsbeispieles in der Zeichnung dargestellt und wird wie folgt beschrieben. Es zeigen
- Figur 1: Schnitt durch eine aus Kunststoff bestehende Zylinderkopfhaube für eine Brennkraftmaschine, beinhaltend eine daran angeformte Elastomerdichtung;
- Figur 2: Teildarstellung eines die Dichtung beinhaltenden Schenkels der Zylinderkopfhaube;
- Figuren 3 bis 5: Varianten zu Figur 2.

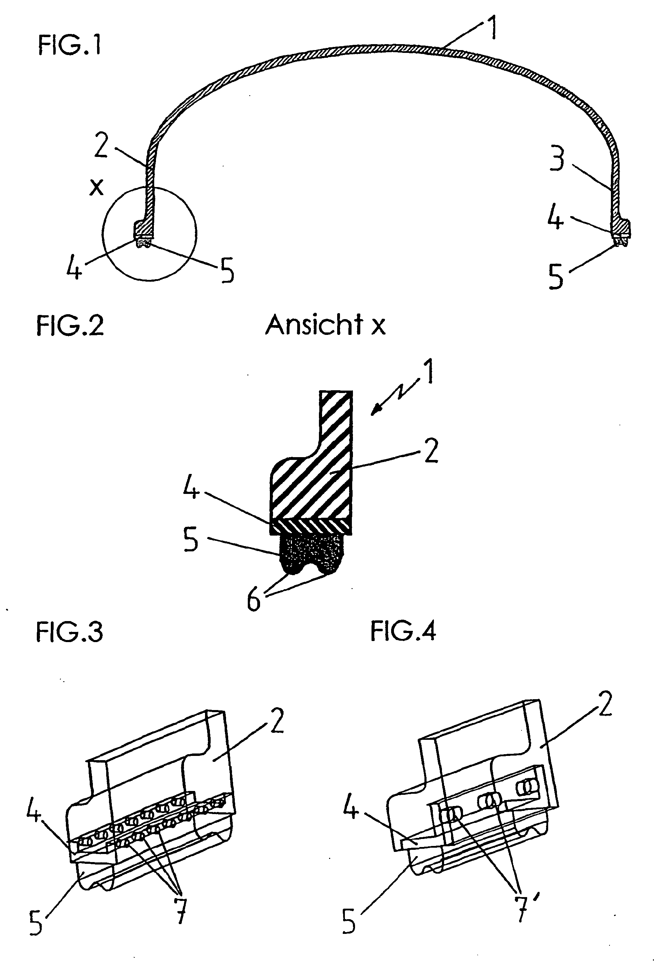

Figur 1 zeigt einen Schnitt durch ein Kunststoffbauteil 1, in diesem Beispiel gebildet durch eine Zylinderkopfhaube , die zwei Schenkel 2, 3 aufweisen soll. In den Endbereichen der Schenkel 2, 3 ist über ein Trägerelement 4 eine elastomere Dichtung 5 angeformt.
Figur 2 zeigt in vergrößerter Darstellung den Schenkel 2 der Zylinderkopfhaube 1. Erkennbar ist in diesem Beispiel ein im Querschnitt rechteckiges Trägerelement 4 mit ausschliesslich daran angeformtem elastomeren Dichtelement 5 samt Dichtlippen 6. Erzeugt wird die Zylinderkopfhaube 1 dadurch, dass die elastomere Dichtung 5 zunächst an das metallische Trägerelement 4 angespritzt wird. In einem Folgeschritt wird das die elastomere Dichtung 5 beinhaltende Trägerelement 4 in eine Form bzw. ein Formteil einer Kunststoff-Spritzgießmaschine eingebracht und die Zylinderkopfhaube 1 wird ausschliesslich durch Anspritzen von Kunststoffmaterial ausschließlich an das Trägerelement 4 erzeugt. In diesem Beispiel soll zwischen dem Schenkel 2 und dem Trägerelement 4 eine Verbindung über chemische Haftvorgänge, beispielsweise durch Verwendung eines Klebstoffes oder dergleichen, herbeigeführt werden.
Die Figuren 3 bis 5 zeigen Varianten zu Figur 2.

In Figur 3 weist das Trägerelement 4 ein U-förmiges Querschnittsprofil auf.
Wie bereits vorher angesprochen, wurde an das Trägerelement 4 zunächst einmal die Dichtung 5 angespritzt. Nach dem Einlegen des Trägerelementes 4 in die entsprechend gestaltete Form der Kunststoff-Spritzgießmaschine wird der Schenkel 2 der zu erzeugenden Zylinderkopfhaube ausschließlich an das U-förmige Profil 4, nämlich dessen inneres Profil angespritzt. Über die Durchgangsöffnungen 7 findet eine mechanische Verknüpfung (Verklammerung) zwischen Trägerelement 4 und Schenkel 2 statt.
Figur 4 zeigt eine Alternative zu Figur 3. Das metallische Trägerelement 4 weist einen L-förmigen Querschnitt auf und ist ebenfalls mit Durchgangsöffnungen 7' versehen. Die Reihenfolge der Verbindung zwischen Trägerelement 4 und elastomerer Dichtung 5 erfolgt in Analogie zu den vorher beschriebenen Figuren. Die den Schenkel 2 beinhaltende Zylinderkopfhaube wird im Anschluß daran angespritzt, wobei über die Durchgangsöffnungen 7' eine mechanische Verklammerung zwischen Trägerelement 4 und Schenkel 2 herbeigeführt wird.

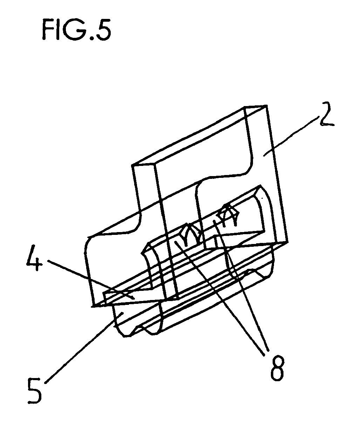

Figur 5 zeigt eine weitere Alternative zu Figur 3. Erkennbar ist ein metallisches Trägerelement 4, das in diesem Beispiel einen rechtwinkligen Querschnitt aufweist. Am längeren Schenkel ist die Dichtung 5 angespritzt. Der kürzere vertikal verlaufende Schenkel weist zur Erzeugung abgewinkelter Zungen 8 Einschnitte auf. Die Zungen 8 sind hierbei alternierend abgebogen, so dass jeweils entgegengesetzt umgebogene Metallkantenabschnitte gebildet werden. Durch diese Maßnahme wird eine gute mechanische Verknüpfung (Verklammerung) zwischen Trägerelement 4 und Schenkel 2 erreicht.

## Patentansprüche

1. Verfahren zur Herstellung eines Kunststoffbauteiles (1) für eine Brennkraftmaschinewobei das Kunststoffbauteil (1) mit einer elastomeren Dichtung (5) in Wirkverbindung steht, beinhaltend folgende Fertigungsschritte:
die elastomere Dichtung (5) wird an mindestens ein metallisches Trägerelement (4) angespritzt,
das Trägerelement (4) samt Dichtung (5) wird in eine Form bzw. ein Formteil eines Kunststoff-Spritzgießwerkzeuges eingebracht und das Kunststoffbauteil wird ausschliesslich durch Anformung von Kunststoffmaterial an das Trägerelement (4) erzeugt,
das fertige Kunststoffbauteil (1) samt angeformter Dichtung (5) wird entformt.

2. Verfahren nach Anspruch 1, **dadurch gekennzeichnet, dass** die Verbindung zwischen Trägerelement (4) und Kunststoffbauteil (1) durch chemische Haftvorgänge erfolgt.

3. Verfahren nach einem der Ansprüche 1 bis 2, **dadurch gekennzeichnet, dass** die Verbindung zwischen Trägerelement (4) und Kunststoffbauteil (1) durch mechanische Verknüpfung (7, 7', 8) erfolgt.

4. Verfahren nach einem der Ansprüche 1 bis 3, **dadurch gekennzeichnet, dass** das Kunststoffbauteil (1) durch eine mit Schenkeln (2, 3) versehene Zylinderkopfhaube gebildet ist, wobei das Trägerelement (4) in den freien Endbereichen der Schenkel (2, 3) vorgesehen wird.

5. Verfahren nach einem der Ansprüche 1 bis 4, **dadurch gekennzeichnet, dass** Tempervorgänge der elastomeren Dichtung (5) auschliesslich zusammen mit dem Trägerelement (4) durchgeführt werden.

6. Kunststotlbauteil für eine Brennkraftmaschine, mit einer elastomeren Dichtung (5), hergestellt nach einem Verfahren gemäß einem der Ansprüche 1 bis 5, **dadurch gekennzeichnet, dass** das Trägerelement (4) profiliert ausgebildet und zur Erzeugung mechanischer Verknüpfungen zwischen Schenkeln (2, 3) des Kunststoffbauteiles (1) und dem Trägerelement (4) mit Durchgangsöffnungen (7, 7'), Ansätzen oder abgebogenen Zungen (8) versehen ist.

7. Kunststoffbauteil nach Anspruch 6, gebildet durch eine mit Schenkeln (2, 3) versehene Zylinderkopfhaube, wobei das Trägerelement (4) in den Endbereichen der Schenkel (2, 3) angeordnet ist.

8. Kunststoffbauteil nach einem der Ansprüche 6 bis 7, **dadurch gekennzeichnet, dass** das Trägerelement (4) durch ein rechtwinkliges oder U-förmiges Profil gebildet ist.

9. Kunststoffbauteil nach einem der Ansprüche 7 bis 8, **dadurch gekennzeichnet, dass** die Durchgangsöffnungen (7, 7'), Ansätze oder Zungen (8) im Bereich der dem jeweiligen Schenkel (2, 3) der Zylinderkopfhaube (1) zugewandten Teile des Trägerelementes (4) vorgesehen sind.

## Claims

1. Process for the production of a plastic part (1) for an internal combustion engine, wherein the plastic part (1) is operatively connected to an elastomer gasket (5), including the following production steps:
the elastomer gasket (5) is injected onto at least one metal support element (4), the support element (4) together with the gasket (5) is brought into a mould or a mould part of a plastic injection moulding unit, and the plastic part is exclusively generated by moulding plastic material onto the support element (4),
the finished plastic part (1) together with the moulded-on gasket (5) is removed from the mould.

2. Process according to Claim 1, **characterised in that** the connection between the support element (4) and the plastic part (1) is achieved by chemical adhesion processes.

3. Process according to one of Claims 1 to 2, **characterised in that** the connection between the support element (4) and the plastic part (1) is achieved by mechanical connection (7, 7', 8).

4. Process according to one of Claims 1 to 3, **characterised in that** the plastic part (1) is formed by a cylinder head cover provided with legs (2, 3), wherein the support element (4) is provided in the free end regions of the legs (2, 3).

5. Process according to one of Claims 1 to 4, **characterised in that** tempering processes of the elastomer gasket (5) are exclusively conducted together with the support element (4).

6. Plastic part for an internal combustion engine, with an elastomer gasket (5), produced using the process according to one of Claims 1 to 5, **characterised in that** the support element (4) has a contoured configuration and is provided with passages (7, 7'), extensions or bent-off lugs (8) for generation of mechanical connections between the legs (2, 3) of the plastic part (1) and the support element (4).

7. Plastic part according to Claim 6, formed by a cylinder head cover provided with legs (2, 3), wherein the support element (4) is arranged in the end regions of the legs (2, 3).

8. Plastic part according to one of Claims 6 to 7, **characterised in that** the support element (4) is formed by a right-angled or U-shaped profile.

9. Plastic part according to one of Claims 7 to 8, **characterised in that** the passages (7, 7'), extensions or lugs (8) are provided in the region of the parts of the support element (4) facing the respective leg (2, 3) of the cylinder head cover (1).

## Revendications

1. Procédé de fabrication d'une pièce en matière plastique (1) pour un moteur à combustion interne, la pièce en matière plastique (1) coopérant avec un joint élastomère (5), comprenant les étapes suivantes :
le joint élastomère (5) est injecté sur au moins un élément métallique de support (4),
l'élément de support (4) et le joint (5) sont disposés dans un moule ou une partie de moule d'un outil de moulage par injection de matière plastique, et la pièce en matière plastique est exclusivement produite par moulage de matière plastique sur l'élément de support (4),
la pièce en matière plastique (1) finie et le joint (5) formé dessus sont démoulés.

2. Procédé selon la revendication 1, **caractérisé en ce que** la jonction ente l'élément de support (4) et la pièce en matière plastique (1) est obtenue par processus d'adhérence chimique.

3. Procédé selon l'une des revendications 1 et 2, **caractérisé en ce que** la jonction entre l'élément de support (4) et la pièce en matière plastique (1) est obtenue par liaison mécanique (7, 7', 8).

4. Procédé selon l'une des revendications 1 à 3, **caractérisé en ce que** la pièce en matière plastique (1) est formée par un couvre-culasse pourvu d'ailes (2, 3), l'élément de support (4) étant prévu au niveau des extrémités libres des ailes (2, 3).

5. Procédé selon l'une des revendications 1 à 4, **caractérisé en ce que** les processus d'étuvage du joint élastomère (5) sont exclusivement exécutés avec l'élément de support (4).

6. Pièce en matière plastique pour un moteur à combustion interne, avec un joint élastomère (5), fabriquée suivant un procédé selon l'une des revendications 1 à 5, **caractérisée en ce que** l'élément de support (4) est profilé et pourvu d'ouvertures de traversée (7, 7'), de brides ou de languettes (8) pliées pour la réalisation de liaisons mécaniques entre les ailes (2, 3) de la pièce en matière plastique (1) et l'élément de support (4).

7. Pièce en matière plastique selon la revendication 6, formée par un couvre-culasse pourvu d'ailes (2, 3), l'élément de support (4) étant prévu au niveau des extrémités libres des ailes (2, 3).

8. Pièce en matière plastique selon l'une des revendications 6 et 7, **caractérisée en ce que** l'élément de support (4) est formé par un profilé à section en équerre ou en forme de U.

9. Pièce en matière plastique selon l'une des revendications 7 et 8, **caractérisée en ce que** les ouvertures de traversée (7, 7'), les brides ou les languettes (8) sont prévues dans la région des parties de l'élément de support (4) dirigées vers l'aile correspondante (2, 3) du couvre-culasse (1).
